# EUROPEAN PATENT APPLICATION

(11) **EP 4 571 574 A1**
(43) Date of publication of application: **18.06.2025**
(21) Application number: 23216838.5
(22) Date of filing: 14.12.2023
(51) Int. Cl.: G06K 19/07

(54) **RF COMMUNICATIONS DEVICE WITH EMI REDUCTION**

(71) Applicant: NXP B.V., 5656 AG Eindhoven (NL)
(72) Inventor: FELDHOFER, Martin, 5656AG Eindhoven (NL); RASMUSSEN, Björn, 5656AG Eindhoven (NL); THüRINGER, Peter, 5656AG Eindhoven (NL)
(74) Representative: Hardingham, Christopher Mark

(57) **Abstract**

A Radio Frequency, RF, communications device. The device includes a pair of antenna terminals, which are connectable to an antenna. The device also includes an automatic gain controller, which is coupled to the antenna terminals for receiving an output current of the antenna. The automatic gain controller is operable to convert the output current of the antenna into a modulated current. The device further includes a rectifier, which is coupled to the automatic gain controller to receive the modulated current. The rectifier is operable to convert the modulated current into a rectified current. The device also includes a voltage limiter, which is coupled to the rectifier for receiving the rectified current. The voltage limiter is operable to convert the rectified current into a limited rectified voltage for supplying power to the RF communications device. An RFID tag comprising the RF communications device is also disclosed.

## Description

### FIELD

This disclosure relates to an RF communications device and to an RFID tag comprising the RF communications device.

### BACKGROUND

Electromagnetic interference can inhibit the correct operation of RF communications devices such as RFID/NFC tags and active powered NFC controller ICs. The rectification of currents induced in an antenna of such a tag by a received electromagnetic signal can be problematic in this respect since the rectification process can itself produce unwanted emissions within the RF spectrum.

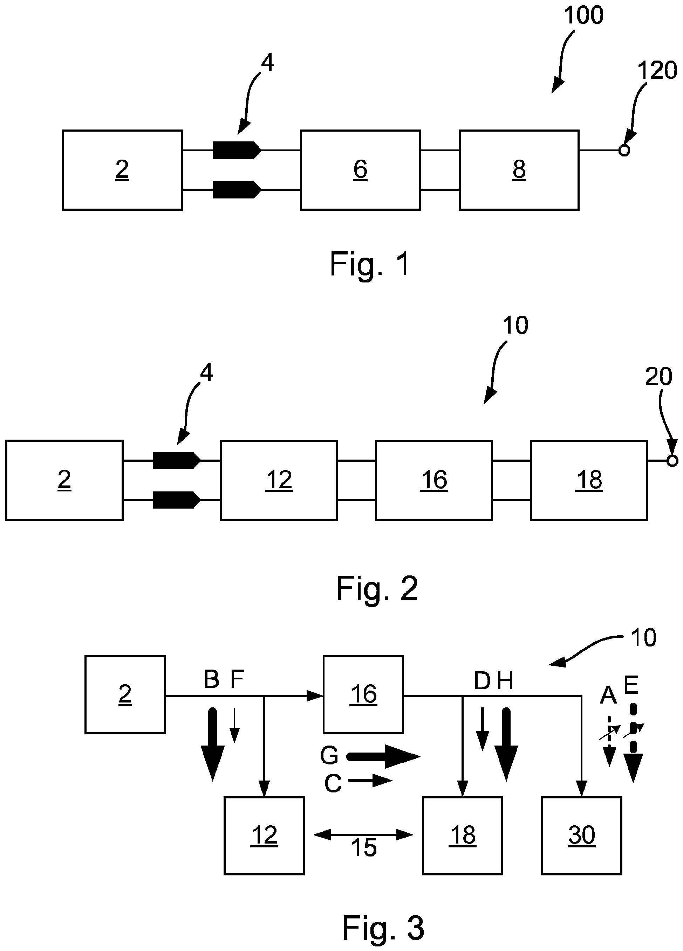

Figure 1 shows a block diagram of a conventional RF communications device 100. In particular, Figure 1 shows the various components which are used for providing power for the RF communications device 100.

The RF communications device 100 includes an antenna 2. The antenna 2 may be used for wireless communications to and from the RF communications device 100. In a passive RF communications device 100 such as a Radio Frequency Identification (RFID) tag and/or a Near Field Communications (NFC) tag, power for the RF communications device 100 may be derived from the incoming RF carrier wave (e.g., at 13.56MHz).

The RF communications device 100 also includes antenna terminals 4, a rectifier 6 for rectifying the AC signal received at the antenna terminals into a DC voltage, and a limiter 8. The limiter 8 has an output 120, which provides a limited chip supply voltage V_{DDLIM} for the RF communications device 100, which is derived from the rectified DC voltage that is outputted by the rectifier 6.

Because the antenna 2 introduces a field-strength dependent current into the system, the limiter is used. The limiter 8 sinks current that is not used by the system to prevent the internal voltage exceeding the limits of the process technology which is used to manufacture the RF communications device 100. In a RF communications device 100 of the kind shown in Figure 1, relatively high currents are required to pass through the rectifier 6, which is a non-linear component. As noted above, this can produce high levels of Electromagnetic Interference (EMI) which may violate ETSI limits and which interfere with the operation of the RF communications device 100 and/or other devices in the vicinity.

### SUMMARY

Aspects of the disclosure are set out in the accompanying independent and dependent claims. Combinations of features from the dependent claims may be combined with features of the independent claims as appropriate and not merely as explicitly set out in the claims.

According to an aspect of this disclosure, there is provided a Radio Frequency, RF, communications device comprising:
a pair of antenna terminals connectable to an antenna;
an automatic gain controller coupled to the antenna terminals for receiving an output current of the antenna, wherein the automatic gain controller is operable to convert the output current of the antenna into a modulated current;
a rectifier coupled to the automatic gain controller to receive the modulated current, wherein the rectifier is operable to convert the modulated current into a rectified current; and
a voltage limiter coupled to the rectifier for receiving the rectified current, wherein the voltage limiter is operable to convert the rectified current into a limited rectified voltage for supplying power to the RF communications device.

Embodiments of this disclosure can modulate the current that is received from the antenna, thereby to reduce the amount of current that enters the rectifier. The reduced current in the rectifier can lead to a reduction in unwanted emissions (associated with the rectification process) within the RF spectrum.

The voltage limiter may comprise a path for diverting a portion of the rectified current. The limited rectified voltage may be derived from (correspond to) a non-diverted remainder of the rectified current.

The voltage limiter may be operable to produce a control signal according to a magnitude of the diverted portion of the rectified current. The control signal may be used to control the automatic gain controller. This feedback mechanism can allow the device to minimise the amount of current in the rectifier (further decreasing emissions in the RF spectrum) while optionally also retaining some slack (spare current) within the rectifier in case of increases in the demand for current by functional components of the RF communications device.

The voltage limiter may include a circuit operable to compare the diverted portion of the rectified current with a reference current and to output the control signal as a digital signal indicative of the comparison.

The RF communications device may further comprise a digital controller for controlling the automatic gain controller based at least in part on the control signal produced by the voltage limiter.

The automatic gain controller may comprise a resistive digital-to-analogue-converter, RDAC. The digital controller may be operable to apply a digital control word to the RDAC to control a resistance of the RDAC.

The digital controller may be operable to decrease the resistance of the RDAC in response to a determination that the control signal produced by voltage limiter is indicative of the diverted portion of the rectified current exceeding a predetermined maximum.

The predetermined maximum may be set according to a highest tolerable current level within the rectifier. The tolerability of the current level within the rectifier may be determined according to the RF spectrum emissions associated with the rectification process at a given current level.

The digital controller may be operable to increase the resistance of the RDAC in response to a determination that the control signal produced by the voltage limiter is indicative of the diverted portion of the rectified current falling beneath a predetermined minimum.

The predetermined minimum may be set according to an anticipated increase in current drawn by the communications device. As noted above, this can allow the rectifier to retain a certain amount of current in reserve in case of increases in current demand by the functional components of the RF communications device.

The automatic gain controller may be coupled in parallel across the pair of antenna terminals. This can allow a fully balanced operation of the circuit.

The rectifier may comprise a full bridge rectifier comprising a plurality of diode-type devices (e.g. Schottky diodes or PMOS/NMOS transistors connected in diode configuration). Such a rectifier can reduce emissions in the RF spectrum compared to the traditional use of switched, non-linear, components.

In some embodiments, the rectifier does not include any switched CMOS components.

The RF communications device may further comprise a low pass filter coupled between the rectifier and the voltage limiter.

According to another aspect of this disclosure, there is provided a Radio Frequency Identification, RFID, tag or an active powered NFC controller IC comprising an RF communications device of the kind set out above.

For the purposes of this disclosure, "Radio Frequency" refers to frequencies substantially equal to, or falling substantially within, the follow frequency values and bands: 120-150 kHz; 13.56 MHz; 433 MHz; 865-868 MHz; 902-928 MHz; 2450-5800 MHz; 3.1-10 GHz; 24.125 GHz.

### BRIEF DESCRIPTION OF THE DRAWINGS

Embodiments of the present disclosure will be described hereinafter, by way of example only, with reference to the accompanying drawings in which like reference signs relate to like elements and in which:
Figure 1 shows a block diagram of a conventional RF communications device;
Figure 2 shows a block diagram of an RF communications device according to an embodiment of this disclosure;
Figure 3 shows a functional block diagram of an RF communications device according to an embodiment of this disclosure;
Figure 4 shows a circuit for implementing embodiments of this disclosure; and
Figure 5 shows a domain level diagram of an embodiment of this disclosure.

### DETAILED DESCRIPTION

Embodiments of the present disclosure are described in the following with reference to the accompanying drawings.

Figure 2 shows a block diagram of an RF communications device 10 according to an embodiment of this disclosure. The RF communications device 10 includes a pair of antenna terminals 4. The antenna terminals may be connectable to an antenna 2. In some embodiments, the RF communications device 10 is part of, or comprises, a Radio Frequency Identification (RFID) tag, a Near Field Communications (NFC) tag, or an active powered NFC controller IC. The components of the RF communications device 10 shown in Figure 2 (other than the antenna 2) may be provided in a semiconductor die. The semiconductor die may be embedded in the tag (e.g. in the form of a smart card). The antenna 2 itself may be provided elsewhere in the tag. Accordingly, in some embodiments, the RF communications device 10 may be connectable to an antenna 2 using the terminals 4, whereas in other embodiments, the antenna 2 may also be considered to be part of the RF communications device 10.

The RF communications device 10 in Figure 2 also includes an automatic gain controller (AGC) 12. The automatic gain controller 12 is coupled to the antenna terminals 4 for receiving an output current of the antenna 2, which is induced in the antenna by an incoming RF field (e.g., including a carrier at 13.56MHz).

The automatic gain controller 12 is operable to convert the output current of the antenna 2 into a modulated current. In other words, the automatic gain controller 12 may be operable to apply a gain modulation to the AC signal received at the terminals 4. In some embodiments, the automatic gain controller 12 comprises a controllable linear resistor. For instance, as will be described in more detail below, the automatic gain controller 12 may comprise a Resistive Digital to Analog Converter (RDAC).

The RF communications device 10 in Figure 2 further includes a rectifier 16. The rectifier 16 is coupled to the automatic gain controller 12 to receive the modulated AC current produced by the automatic gain controller 12. The rectifier 16 is operable to convert the modulated current into a rectified current. As will be described in more detail below, the rectifier 16 may, in some embodiments, be optimized in a way that less non-linear components occur in the electromagnetic spectrum. For instance, the rectifier 16 may comprise a full bridge rectifier instead of a switched CMOS device. A full bridge rectifier can have reduced EMI emissions owing to its superior linearity compared to switched devices.

The RF communications device 10 in Figure 2 also includes a voltage limiter 18. The voltage limiter 18 is coupled to the rectifier 16 for receiving the rectified current produced by the rectifier 16. The voltage limiter 18 is operable to convert the rectified current into a limited rectified voltage for supplying power to the RF communications device. The limiter 18 may have an output 20, which provides a limited chip supply voltage V_{DDLIM} for the RF communications device 10, which is derived from the rectified DC voltage that is outputted by the rectifier 16.

In some embodiments, the automatic gain controller 12 can act as a primary limiter circuit that can remove at least some of the current that is induced via the antenna 2 (e.g., the current to be removed may be sunk into an Integrated Circuit (IC) in which the RF communications device 10 is comprised). In particular, the automatic gain controller 12 can sink current that is not required for the production of the limited chip supply voltage V_{DDLIM} (e.g., in view of the presently prevailing current drawing requirements of a load coupled to the output 20) from the circuit shown in Figure 2. In this way, the current that is passed to the rectifier 16 may be modulated for reducing the amplitude of the current to be rectified, which in turn can reduce EMI emissions by the rectifier 16.

In some embodiments, the voltage limiter 18 can further act to measure the remaining current, and this can be used to create feedback for controlling the modulation of the output current of the antenna 2 that is carried out by the automatic gain controller 12.

Figure 3 shows a functional block diagram of an RF communications device 10 according to an embodiment of this disclosure. In particular, Figure 3 shows the automatic gain controller 12, rectifier 16, voltage limiter 18 described above in relation to Figure 2. The antenna 2 is also shown. A load 30 is further shown in Figure 3, which may be coupled to the output 20 described above in relation to Figure 2.

Figure 3 schematically shows the amounts of current flowing at/through the various components of the RF communications device 10 in two conditions, corresponding to whether a relatively small current A or a relatively large current E is currently being demanded by the load 30.

When a relatively small current A is being demanded by the load 30, the amount of current C that is provided to the rectifier 16 may be correspondingly small. To reduce the current C that passes through the rectifier 16, the automatic gain controller 12 can sink a relatively large current B, whereby much of the current that is received from the antenna 2 does not reach the rectifier 16. In this way, the current demands of the load 30 may be satisfied in a way that reduces EMI emissions compared to devices of the kind described above in relation to Figure 1.

Since the rectified current that is outputted by the rectifier 16 is relatively small, the amount of current D flowing in the voltage limiter 18 may be correspondingly small. This information may be used as feedback for the automatic gain controller 12.

On the other hand, when a relatively large current E is being demanded by the load 30, the amount of current G that is provided to the rectifier 16 may be correspondingly large. To allow the relatively large current G to pass through the rectifier 16, the automatic gain controller 12 can sink a relatively small current F. Accordingly, much of the current that is received from the antenna 2 reaches the rectifier 16. In this way, the current demands of the load 30 may be satisfied. Moreover, the amount of EMI emissions produced by the rectifier 16 is inline line with the (presently) large current demand of the load 30.

Since the rectified current that is outputted by the rectifier 16 is relatively large, the amount of current H flowing in the voltage limiter 18 may be correspondingly large. Again, this information may be used as feedback for the automatic gain controller 12.

With further reference to Figure 3, it can be seen that the currents B, F in the automatic gain controller 12 and their corresponding respective currents D, H in the voltage limiter 18 allow the function of current removal/limitation in the circuit to be shifted between the automatic gain controller 12 and the voltage limiter 18. For instance, when the current in the automatic gain controller 12 is large (B) the current in the voltage limiter 18 (D) may be correspondingly small. Conversely, when the current in the automatic gain controller 12 is small (F) the current in the voltage limiter 18 (H) may be correspondingly large. Note that in general, B+D+A = F + H + E = the available/induced current in the system, which may itself vary due to changes in the field strength received at the antenna 2.

In some embodiments, an "overhead" or "buffer" amount of current may be retained in the voltage limiter 18, over and above the prevailing current demands of the load 30. This can prevent situations in which the circuit is not able to satisfy short term increases in the current demands of the load 30. The "overhead" or "buffer" amount may be diverted from the load 30 by the voltage limiter 18 unless and until such fluctuations arise. Accordingly, embodiments of this disclosure can allow the amount of current supplied to the rectifier 16 to be "right sized" for the prevailing current demands of the load 30 (so as to reduce EMI emissions where the prevailing current demands permit it), while still allowing the current limiting function of the circuit to be performed by the voltage limiter 18 (e.g., so as to account for fluctuations in the current demands of the load 30).

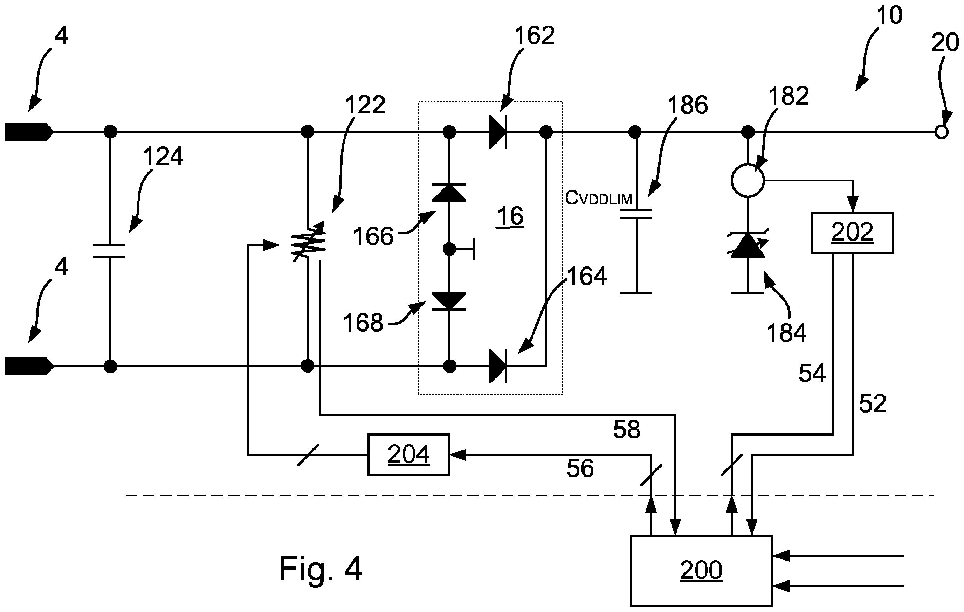

Figure 4 shows a circuit of an RF communications device 10 according to an embodiment of this disclosure.

The circuit includes a pair of antenna terminals 4 of the kind already described above. In some embodiments, a (low pass) filter capacitor 124 may be coupled across the antenna terminals 4.

In this embodiment, the automatic gain controller 12 is implemented using a Resistive Digital to Analog Converter (RDAC) as noted previously. It will be appreciated that other implementations for the automatic gain controller 12 are possible.

The RDAC in this embodiment includes a variable resistance 122. The variable resistance 122 may be coupled across the antenna terminals 4 (e.g., in parallel with the optional filter capacitor 124). The variable resistance 122 may be controlled by a gain controller 200, which instructs 56 an RDAC controller 204 to set the resistance of the variable resistance 122 to a required level. It will be appreciated that increasing the resistance of the variable resistance 122, which is connected in parallel with the inputs of the rectifier 16, will increase the amount of current that passes from the antenna terminals 4 to the rectifier 16 (to be described below), and that conversely, the amount of current that passes from the antenna terminals 4 to the rectifier 16 may be decreased by lowering the resistance of the variable resistance 122.

The use of a linear variable resistor for implementing the automatic gain controller, in which the variable resistance is set according to a combination of the field strength of the signal received by the antenna 2 and the prevailing current demand of the load can, in accordance with embodiments of this disclosure, reduce distortion and consequently reduce odd harmonics in the EMI emission spectrum.

In some embodiments, the variable resistance 122 may comprise a plurality of resistors coupled to the RDAC controller 204, with the resistors being enabled/disabled by one of more bits of a control word applied to the variable resistance 122 by the RDAC controller 204, under the guidance of the gain controller 200. The instruction 56 provided to the RDAC controller 204 by the gain controller 200 may also comprise a digital control word. The gain controller 200 may also directly monitor the operation of the variable resistance 122 (e.g., to verify the present resistance level), as illustrated by the signal 58 in Figure 4.

The rectifier 16 in this embodiment is implemented using a full bridge rectifier. The full bridge rectifier may include a plurality of devices such as Schottky diodes 162, 164, 166, 168. It will be appreciated that other diode-type devices, such as diode connected PMOS/CMOS transistors could be used in other embodiments. In the present implementation:
- a first Schottky diode 162 has a cathode terminal coupled to the output 20 and an anode terminal coupled to a first of the antenna terminals 4;
- a second Schottky diode 164 has a cathode terminal coupled to the output 20 and an anode terminal coupled to a second of the antenna terminals 4;
- a third Schottky diode 166 has a cathode terminal coupled to the anode terminal of the first Schottky diode 162 and an anode terminal coupled to a reference potential (e.g. ground); and
- a fourth Schottky diode 168 has a cathode terminal coupled to the anode terminal of the second Schottky diode 164 and an anode terminal coupled to the reference potential (e.g. ground).

Note that the anode terminals of the third Schottky diode 166 and the fourth Schottky diode 168 are coupled together, and that the third Schottky diode 166 and the fourth Schottky diode 168 are coupled in parallel with the variable resistance 122. Note also that the cathode terminals of the first Schottky diode 162 and the second Schottky diode 164 are coupled together and that a node between the cathode terminals of the first Schottky diode 162 and the second Schottky diode 164 forms an output of the rectifier 16. The rectifier 16 has two inputs. One input of the rectifier 16 is formed by a node located between the anode terminal of the first Schottky diode 162 and the cathode terminal of the third Schottky diode 166. Another input of the rectifier 16 is formed by a node located between the anode terminal of the second Schottky diode 164 and the cathode terminal of the fourth Schottky diode 168. Accordingly, the rectifier 16 has a differential input and a single ended output. The diode implementation of a full bridge rectifier can reduce the even harmonics in the EMI emission spectrum. Note that the fully symmetrical arrangement of the components in the full bridge rectifier can remove any common mode that may otherwise contribute to EMI emissions.

The RF communications device 10 in this embodiment includes an optional (low pass) filter capacitor 186. The filter capacitor may have a first terminal that is coupled to the output of the rectifier 16 and a second terminal that is coupled to a reference potential (e.g., ground).

In the present embodiment, the voltage limiter of the RF communications device 10 is implemented using a Zener diode 184, or any device/circuit that emulates the I_V characteristics of a Zener diode. The Zener diode 184 has a cathode terminal coupled to the output of the rectifier 16 (and also to the output 20). The Zener diode 184 also has an anode terminal that is coupled to a reference potential (e.g., ground). Accordingly, in this embodiment, the voltage limiter comprises a path (including the Zener diode 184 and the current detector 182 to be described below) for diverting a portion of the rectified current that is outputted by the rectifier 16. The limited, rectified current that is passed to the output 20 accordingly comprises a non-diverted remainder of the rectified current (i.e., that part of the rectified current that does not pass through the Zener diode 184). As will be described below in relation to the current detector 182 and the comparator circuit 202, in some embodiments, the voltage limiter is operable to produce a control signal according to a magnitude of the diverted portion of the rectified current (i.e., that part of the rectified current that passes through the Zener diode 184).

In the present embodiment, the voltage limiter of the RF communications device 10 also includes a current detector 182, which may be coupled between the output of the rectifier 16 (and also to the output 20) and the cathode terminal of the Zener diode 184. The current detector 182 may have an output coupled to a comparator circuit 202.

The comparator circuit 202 may compare the current detected by the current detector 182 with a reference current and output a signal 52 indicative of the comparison to the gain controller 200. The reference current itself may be specified to the comparator circuit 202 by the gain controller 200 using signal 54. The signals 52, 54 may be digital signals in the form of one or more N bit words. Accordingly, in some embodiments, the voltage limiter includes a circuit operable to compare the diverted portion of the rectified current with a reference current and to output a control signal as a digital signal indicative of the comparison. This control signal may be passed to, and used by, the gain controller 200 to determine its operation of other parts of the automatic gain controller, such as the RDAC controller 204 and (consequently) the variable resistance 122.

Accordingly, in some embodiments, the gain controller 200 is operable to instruct the RDAC 204 to decrease the resistance of the variable resistance 122. This may be done in response to a determination (e.g., by the gain controller 200, based on the signal 52) that the diverted portion of the rectified current exceeds, or is about to exceed, a predetermined maximum. The predetermined maximum may, for instance, be set according to a highest tolerable current level within the rectifier 16 (so as to keep EMI emissions from the rectifier 16 at or below a maximum tolerable level).

Furthermore, in some embodiments, the gain controller 200 is operable to instruct the RDAC 204 to increase the resistance of the variable resistance 122. This may be done in response to a determination (e.g., by the gain controller 200, based on the signal 52) that the diverted portion of the rectified current falls beneath, or is about to fall beneath, a predetermined minimum. The predetermined minimum may, for instance, be representative of the "overhead" or "buffer" amount described above, and/or may be set according to an anticipated increase in current drawn by the load 30.

The diverted portion of the rectified current may be considered to be representative of the strength of the EM field received by the antenna 2. For a given resistance setting of the automatic gain controller 12 (e.g., the variable resistance 122), an increase in the received field strength will result in an increased current in the rectifier 16 and consequently (for a given current drawn by the load 30) an increase in the amount of current that is diverted by the voltage limiter 18. Conversely, for a given resistance setting of the automatic gain controller 12 (e.g., the variable resistance 122), a decrease in the received field strength will result in a decreased current in the rectifier 16 and consequently (for a given current drawn by the load 30) a decrease in the amount of current that is diverted by the voltage limiter 18. Accordingly, embodiments of the present disclosure may effectively adjust the resistance setting of the automatic gain controller 12 (e.g., the variable resistance 122) according to the received field strength at the antenna (as measured, indirectly, by the current detector 182 of the voltage limiter.

According to embodiments of this disclosure, by managing (setting/increasing/decreasing) the resistance of the variable resistance 122, the automatic gain controller 12 may seek to minimise the current in the rectifier 16 (to minimise EMI emissions by the rectifier 16) while nevertheless maintaining the current in the rectifier 16 at a level that satisfies the prevailing current drawing demands of the load 30. Moreover, with reference again to the "overhead" or "buffer" amount of current described above, the automatic gain controller 12 may seek to ensure that the amount of current in the rectifier 16 is sufficient to accommodate sudden increases in the current drawing requirements of the load 30. Furthermore, in some embodiments, the gain controller 200 may have (or be passed, e.g., by the software 502 described below) knowledge of a next task or mode of operation to be performed by the RF communications device 10. This knowledge may allow the gain controller 200 to adjust the resistance of the variable resistance 122 according to anticipated current drawing requirements of the load 30 in that next task or mode, so as to ensure that sufficient rectified current is available to support that task or mode.

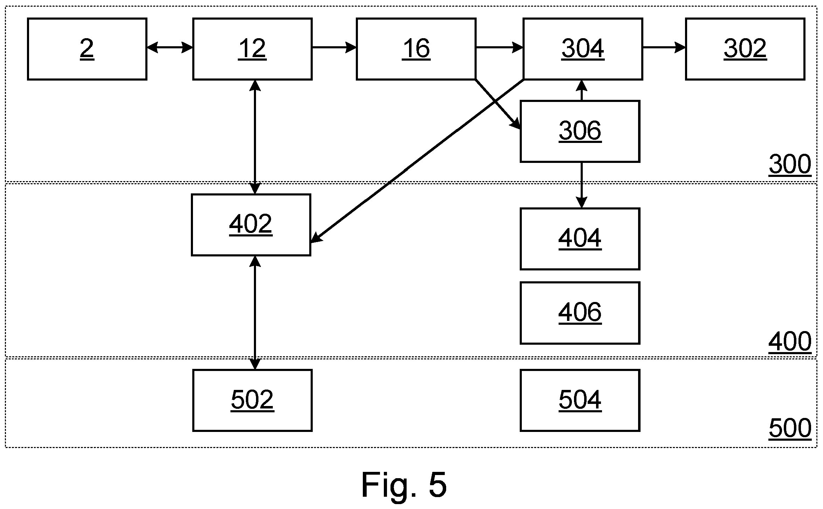

Figure 5 shows a domain level diagram of an embodiment of this disclosure. The system shown in this diagram includes an analog domain 300, a digital domain 400 and a software domain 500.

The analog domain 300 includes:
- the antenna 2;
- the automatic gain controller 12;
- the rectifier 16;
- the voltage limiter 304 (e.g. the diode-type device 184);
- the DAC + comparator 306 (e.g., collectively, the current detector 182 and the comparator circuit 202); and
- LDOs/IC supply 302 (the output 20 may be included in this part).

The digital domain 400 includes:
- digital parts 402 of the automatic gain controller 12 (e.g. the gain controller 200 in Figure 4);
- digital parts 404, 406 of other functional components of the RF communications device 10 (e.g., DAC control, demodulation control, demodulation decoding etc.).

The software domain 500 includes:
- software parts 502 involved in the control of the automatic gain controller 12 (e.g. software involved in the operation of the gain controller 200 in Figure 4); and
- software parts 504 involved in operating other functional components of the RF communications device 10.

Couplings/function relationships between the various analog domain, digital domain and software components are indicated by the various arrows included in Figure 5.

According to an embodiment of this disclosure, there may be provided an RFID tag comprising the RF communications device of the kind described herein. The RFID tag may be an NFC tag.

According to an embodiment of this disclosure, there may be provided an active powered NFC controller IC comprising the RF communications device of the kind described herein.

Accordingly, there has been disclosed a Radio Frequency, RF, communications device. The device includes a pair of antenna terminals, which are connectable to an antenna. The device also includes an automatic gain controller, which is coupled to the antenna terminals for receiving an output current of the antenna. The automatic gain controller is operable to convert the output current of the antenna into a modulated current. The device further includes a rectifier, which is coupled to the automatic gain controller to receive the modulated current. The rectifier is operable to convert the modulated current into a rectified current. The device also includes a voltage limiter, which is coupled to the rectifier for receiving the rectified current. The voltage limiter is operable to convert the rectified current into a limited rectified voltage for supplying power to the RF communications device. An RFID tag comprising the RF communications device is also disclosed.

Although particular embodiments of the disclosure have been described, it will be appreciated that many modifications/additions and/or substitutions may be made within the scope of the claims.

## Claims

1. A Radio Frequency, RF, communications device comprising:
a pair of antenna terminals connectable to an antenna;
an automatic gain controller coupled to the antenna terminals for receiving an output current of the antenna, wherein the automatic gain controller is operable to convert the output current of the antenna into a modulated current;
a rectifier coupled to the automatic gain controller to receive the modulated current, wherein the rectifier is operable to convert the modulated current into a rectified current; and
a voltage limiter coupled to the rectifier for receiving the rectified current, wherein the voltage limiter is operable to convert the rectified current into a limited rectified voltage for supplying power to the RF communications device.

2. The RF communications device of claim 1, wherein the voltage limiter comprises a path for diverting a portion of the rectified current, and wherein the limited rectified voltage is derived from a non-diverted remainder of the rectified current.

3. The RF communications device of claim 2, wherein the voltage limiter is operable to produce a control signal according to a magnitude of the diverted portion of the rectified current.

4. The RF communications device of claim 3, wherein the voltage limiter includes a circuit operable to compare the diverted portion of the rectified current with a reference current and to output the control signal as a digital signal indicative of the comparison.

5. The RF communications device of claim 3 or claim 4, further comprising a digital controller for controlling the automatic gain controller based at least in part on the control signal produced by the voltage limiter.

6. The RF communications device of claim 5, wherein the automatic gain controller comprises a resistive digital-to-analogue-converter, RDAC and wherein the digital controller is operable to apply a digital control word to the RDAC to control a resistance of the RDAC.

7. The RF communications device of claim 6, wherein the digital controller is operable to decrease the resistance of the RDAC in response to a determination that the control signal produced by voltage limiter is indicative of the diverted portion of the rectified current exceeding a predetermined maximum.

8. The RF communications device of claim 7, wherein the predetermined maximum is set according to a highest tolerable current level within the rectifier.

9. The RF communications device of any of claim 6 to 8, wherein the digital controller is operable to increase the resistance of the RDAC in response to a determination that the control signal produced by the voltage limiter is indicative of the diverted portion of the rectified current falling beneath a predetermined minimum.

10. The RF communications device of claim 9, wherein the predetermined minimum is set according to an anticipated increase in current drawn by the communications device.

11. The RF communications device of any preceding claim, wherein the automatic gain controller is coupled in parallel across the pair of antenna terminals.

12. The RF communications device of any preceding claim, wherein the rectifier comprises a full bridge rectifier comprising a plurality of diode-type devices.

13. The RF communications device of claim 12, wherein the rectifier does not include any switched CMOS components.

14. The RF communications device of any preceding claim, further comprising a low pass filter coupled between the rectifier and the voltage limiter.

15. An RFID tag or an active powered NFC controller IC comprising the RF communications device of any preceding claim.
